# EUROPÄISCHE PATENTANMELDUNG

(11) **EP 1 688 708 A2**
(43) Veröffentlichungstag der Anmeldung: **09.08.2006**
(21) Anmeldenummer: 06002133.4
(22) Anmeldetag: 02.02.2006
(51) Int. Cl.: G01D 5/02

(54) **Vorrichtung zur Bestimmung eines absoluten Drehwinkels**

(30) Priorität: 07.02.2005 DE 202005001887 U
(71) Anmelder: TRW Automotive Safety Systems GmbH, 63743 Aschaffenburg (DE)
(72) Erfinder: Staudt, Norbert, 62743 Aschaffenburg (DE); Stegmann, Volker, 63743 Aschaffenburg (DE); Hirzmann, Guido, 63877 Sailauf (DE); Weigand, Klaus, 36396 Steinau (DE)
(74) Vertreter: Strass, Jürgen

(57) **Zusammenfassung**

Eine Vorrichtung zur Bestimmung eines absoluten Drehwinkels einer Drehachse (12) umfaßt eine erste Meßeinrichtung zur Messung eines Drehwinkels in einem eingeschränkten ersten Meßbereich und eine zweite Meßeinrichtung zur Ermittlung eines absoluten Winkelbereichs. Die zweite Meßeinrichtung umfaßt ein Auslenkelement (20), das eine von der Drehung der Drehachse (12) abhängige Auslenkung erfährt. Die Auslenkung wird wiederum in eine Drehung eines Drehelements (22) umgewandelt.

## Beschreibung

Die Erfindung betrifft eine Vorrichtung zur Bestimmung eines absoluten Drehwinkels einer Drehachse, mit einer ersten Meßeinrichtung zur Messung eines Drehwinkels in einem eingeschränkten ersten Meßbereich und einer zweiten Meßeinrichtung zur Ermittlung eines absoluten Winkelbereichs.

Eine solche Vorrichtung ist aus der DE 198 18 799 A1 bekannt. Die erste Meßeinrichtung umfaßt zwei an der Drehachse angeordnete magnetische Polringe mit in Umlaufrichtung abwechselnd aneinandergereihten Nord- und Südpolen, wobei die Ringe eine unterschiedliche Anzahl von Magnetpolen aufweisen. Jedem Ring ist ein feststehender magnetoresistiver Sensor zugeordnet. Mit dieser Anordnung läßt sich ein Drehwinkel zwar mit sehr hoher Auflösung bestimmen, allerdings nur in einem Bereich von 0° bis max. 180°.

Die DE 198 18 799 A1 schlägt daher eine zweite Meßeinrichtung mit einem Hall-Sensor vor, mit dem im Unterschied zu den magnetoresistiven Sensoren die Polung eines erfaßten Magnetpols bestimmt werden kann. Dadurch läßt sich der Bereich der absoluten Winkelmessung auf ein Intervall von 0° bis 360° erweitern. Zur Bestimmung des absoluten Drehwinkels eines Lenkrads, das mehrere Umdrehungen in beide Drehrichtungen ausführen kann, ist dies jedoch nach wie vor nicht ausreichend.

Aufgabe der Erfindung ist es daher, eine Vorrichtung zu schaffen, mit der ein absoluter Drehwinkel in hoher Auflösung über einen großen Meßbereich, insbesondere über mehrere Umdrehungen, bestimmt werden kann.

Zur Lösung dieser Aufgabe wird eine Vorrichtung der eingangs genannten Art vorgeschlagen, bei der die zweite Meßeinrichtung ein Auslenkelement umfaßt, das eine von der Drehung der Drehachse abhängige Auslenkung erfährt, wobei die Auslenkung wiederum in eine Drehung eines Drehelements umgewandelt wird. Auf diese Weise können auch größere Drehwinkel als 360°, die mehr als einer Umdrehung der Drehachse entsprechen, leicht gemessen werden, ohne daß eine inkrementale Signalauswertung (Zählen der Umdrehungen oder dergleichen) erforderlich ist. Die zunächst vorgesehene Umwandlung der Drehung in eine Auslenkung des Auslenkelements hat den Vorteil, daß die Auslenkung stetig wächst und sich nicht wie eine Drehung nach 360° wiederholt. Bei geeigneter Übersetzung lassen sich durch die anschließende Umwandlung der Auslenkung in eine Drehung des Drehelements genügend viele Umdrehungen der Drehachse auf eine einzige Umdrehung des Drehelements abbilden, so daß z.B. der gesamte Drehwinkelbereich eines Lenkrads erfaßt werden kann. In Kombination mit einer ersten Meßeinrichtung, die eine Drehung der Drehachse in einem eingeschränkten Winkelbereich (z.B. 0° bis 180°) messen kann, entsteht so eine kostengünstige Vorrichtung, mit der der absolute Lenkradwinkel auch unmittelbar nach dem Einschalten der Versorgungsspannung des Kraftfahrzeugs ohne vorherige Relativbewegung bestimmter Komponenten mit ausreichend hoher Auflösung bestimmt werden kann.

Die Umsetzung der Drehung in eine Auslenkung kann gemäß einer bevorzugten Ausführungsform der Erfmdung dadurch erreicht werden, daß die zweite Meßeinrichtung einen an die Drehachse gekoppelten Rotor mit einer spiralförmigen Kulissenführung umfaßt.

Dazu passend kann das Auslenkelement als drehbar gelagerter Arm mit einem Fortsatz ausgebildet sein, der in die Kulissenführung eingreift. Diese Konstruktion sorgt auf einfache Weise dafür, daß eine Drehung der Drehachse zu einer der Drehung entsprechenden Auslenkung des Auslenkelements führt.

Im Falle eines Kraftfahrzeuglenkrads ist es sinnvoll, daß die spiralförmige Kulissenführung eine Anzahl 360°-Windungen aufweist, die wenigstens der Anzahl der von der Drehachse (in diesem Fall die Lenksäule) ausführbaren Umdrehungen entspricht.

Die Umwandlung der Auslenkung in eine Drehung kann durch eine Konstruktion realisiert werden, bei der der Arm eine Verzahnung aufweist, die in eine passende Gegenverzahnung des Drehelements eingreift.

Für die Messung des Drehwinkels des Drehelements ist es vorteilhaft, daß das Drehelement Teil einer Drehwinkelmeßeinheit ist.

Die erste Meßeinrichtung zur Messung des Drehwinkels der Drehachse in einem eingeschränkten ersten Meßbereich umfaßt vorzugsweise ein weiteres Drehelement, das über eine Verzahnung an die Drehachse gekoppelt ist.

Die Erfindung wird nachfolgend anhand einer Vorrichtung zur Messung eines Lenkradwinkels unter Bezugnahme auf die beigefügten Zeichnungen näher beschrieben. In den Zeichnungen zeigen:
- Figur 1 schematisch den Aufbau einer erfindungsgemäßen Vorrichtung gemäß einer beispielhaften Ausführungsform der Erfindung; und
- Figur 2 eine Kulissenführung der erfindungsgemäßen Vorrichtung.

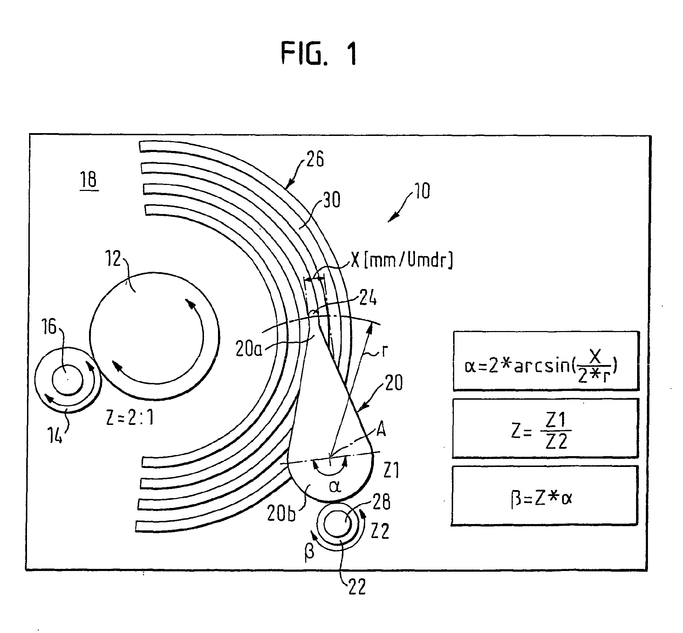

Die in Figur 1 dargestellte Vorrichtung 10 dient zur Bestimmung des absoluten Lenkraddrehwinkels in einem Kraftfahrzeug. Das (nicht gezeigte) Lenkrad ist drehfest an eine Drehachse 12 (Lenksäule) gekoppelt, die ausgehend von einer Ausgangsstellung (Mittellage des Lenkrads) mehrere Umdrehungen in beide Drehrichtungen ausführen kann.

Eine erste Meßeinrichtung ist folgendermaßen aufgebaut. Ein erstes Drehelement 14 ist über eine Verzahnung an die Drehachse 12 gekoppelt. Im dargestellten Ausführungsbeispiel ist das Übersetzungsverhältnis 2:1, d.h. eine Drehung der Drehachse 12 um 180° führt zu einer vollständigen 360°-Drehung des ersten Drehelements 14 (in entgegengesetzter Drehrichtung). Auf dem ersten Drehelement 14 ist ein Permanentmagnet 16 angeordnet, dessen Drehung auf herkömmliche Weise berührungslos mit relativ hoher Auflösung gemessen wird. Somit erlaubt die erste Meßeinrichtung eine Messung des Drehwinkels der Drehachse 12 in einem Bereich von 0° bis 180° mit hoher Genauigkeit.

Um den tatsächlichen absoluten Lenkraddrehwinkel angeben zu können, ist die Kenntnis des aktuellen 180°-Winkelbereichs erforderlich, in dem der mit der ersten Meßeinrichtung gemessene Winkel liegt. Hierzu dient eine zweite Meßeinrichtung, die je nach Anzahl der Umdrehungen, die das Lenkrad insgesamt ausführen kann, die doppelte Anzahl 180°-Winkelbereiche auflösen muß. Im Falle eines Lenkrads, das 3½ Umdrehungen in beide Richtungen (d.h. insgesamt sieben 360°-Umdrehungen) ausführen kann, sind dies also 14 180°-Winkelbereiche, bei vier Umdrehungen in beide Richtungen entsprechend 16 180°-Winkelbereiche.

Die zweite Meßeinrichtung umfaßt einen an die Drehachse 12 gekoppelten Rotor 18, einen drehbar gelagerten Arm 20 und ein zweites Drehelement 22. Der Rotor 18 kann auf geeignete Weise drehfest an die Drehachse 12 gekoppelt oder einstückig mit der Drehachse 12 ausgeführt sein. Der Arm 20 ist um eine feste Achse A drehbar. An einem ersten freien Ende 20a des Arms 20 ist ein Fortsatz 24 angeformt. Der Fortsatz 24 greift in eine Kulissenführung 26 ein, die im senkrecht zur Drehachse 12 verlaufenden Abschnitt des Rotors 18 gebildet ist. Das dem ersten Ende 20a entgegengesetzte zweite freie Ende 20b des Arms 20 ist als Hälfte einer Kreisscheibe ausgebildet, deren Mittelpunkt auf der Lagerachse A des Arms 20 liegt. An der Kreisscheibenhälfte ist eine Verzahnung angeformt, die in eine passende Gegenverzahnung des zweiten Drehelements 22 eingreift. Auf dem zweiten Drehelement 22 ist, ähnlich wie beim ersten Drehelement 14, ein Permanentmagnet 28 angeordnet, dessen Drehung auf herkömmliche Weise berührungslos gemessen wird.

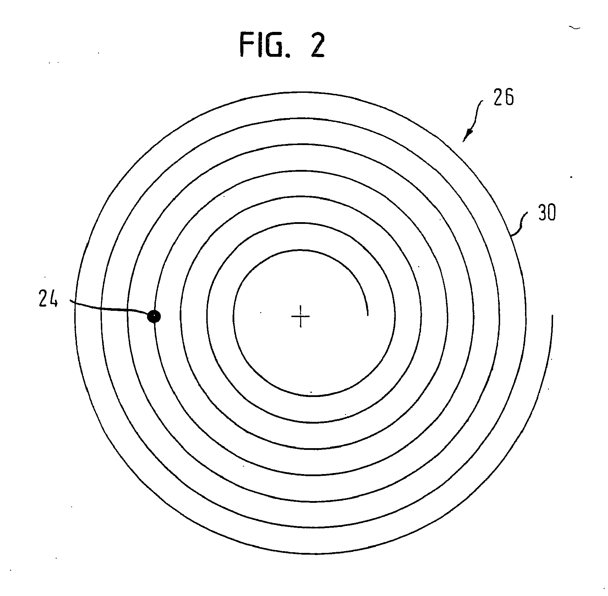

Die in Figur 2 stilisiert in Draufsicht gezeigte Kulissenführung 26 umfaßt eine Spiralnut 30, die im dargestellten Ausführungsbeispiel insgesamt sieben 360°-Windungen aufweist. Die Anzahl der 360°-Windungen der Spiralnut 30 entspricht der Anzahl der Gesamtumdrehungen, die das Lenkrad ausführen kann. Im vorliegenden Fall sind dies - ausgehend von der Ausgangsstellung der Drehachse 12 (Mittellage des Lenkrads) - 3½ Umdrehungen nach links und 3½ Umdrehungen nach rechts. In der Mittellage des Lenkrads befindet sich der Fortsatz 24 deshalb an einer Stelle, die genau der Hälfte der Gesamtlänge der Spiralnut 30 entspricht.

Bei einer Drehung des Lenkrads und des drehfest mit diesem gekoppelten Rotors 18 wird das erste Ende 20a des Arms 20 durch die Zwangsführung des Fortsatzes 24 in der Spiralnut 30 nach innen oder nach außen ausgelenkt. Somit bewirkt die Drehung des Lenkrads eine vom Gesamtdrehwinkel abhängige Verschwenkung des ersten Endes 20a des Arms 20 um die Achse A. Der Verschwenkung des ersten Endes 20a des Arms 20 entspricht eine Drehung des zweiten Endes 20b des Arms 20 um die Achse A. Diese Drehung wird über die Verzahnung des zweiten Endes 20b des Arms 20 und die Gegenverzahnung des zweiten Drehelements 22 auf das zweite Drehelement 22 übertragen.

Die Übersetzung zwischen dem zweiten Ende 20b des Arms 20 und dem zweiten Drehelement 22 ist so gewählt, daß sich mehrere Umdrehungen der Drehachse 12 in jeder Richtung auf jeweils weniger als eine einzige Umdrehung des zweiten Drehelements 22 abbilden lassen.

Für eine zuverlässige Bestimmung des aktuellen 180°-Winkelbereichs mit möglichst einfachen Komponenten ist eine Abbildung der max. möglichen Umdrehungen der Drehachse 12 in jeder Richtung auf genau eine Umdrehung des zweiten Drehelements 22 wünschenswert. Das bedeutet, der Winkel β, der dem max. absoluten Drehwinkel der Drehachse 12 in einer Richtung entspricht, sollte nach Möglichkeit 360° sein. Beeinflussen läßt sich der Winkel β durch folgende Parameter des in Figur 1 gezeigten Aufbaus, genauer gesagt wird der Winkel β um so größer,
- je größer der Spurabstand X der Kulissenführung 26,
- je kleiner der Radius r des ersten Endes 20a des Arms 20,
- je größer die Anzahl der Zähne Z1 des zweiten Endes 20b des Arms 20,
- je kleiner die Anzahl der Zähne Z2 des zweiten Drehelements 22
gewählt wird.

Wie bereits erwähnt, läßt sich durch die erste Meßeinrichtung ein Drehwinkel in einem Meßbereich von 0° bis 180° mit einer hohen Genauigkeit erfassen. Die zweite Meßeinrichtung kann genügend viele 180°-Winkelbereiche auflösen, um den gesamten Drehbereich des Lenkrads abzudecken. Die Bestimmung des absoluten Lenkraddrehwinkels erfolgt dann durch Kombination der Meßergebnisse der ersten und der zweiten Meßeinrichtung.

Mit der erfindungsgemäßen Vorrichtung ist es aufgrund des Einsatzes der beiden stetig ausgeführten Meßeinrichtungen möglich, bei einem Ausfall einer Meßeinrichtung mittels der anderen (funktionsfähigen) Meßeinrichtung die Winkelerfassung eingeschränkt aufrechtzuerhalten.

## Patentansprüche

1. Vorrichtung zur Bestimmung eines absoluten Drehwinkels einer Drehachse (12), mit einer ersten Meßeinrichtung zur Messung eines Drehwinkels in einem eingeschränkten ersten Meßbereich und einer zweiten Meßeinrichtung zur Ermittlung eines absoluten Winkelbereichs, **dadurch gekennzeichnet, daß** die zweite Meßeinrichtung ein Auslenkelement (20) umfaßt, das eine von der Drehung der Drehachse (12) abhängige Auslenkung erfährt, wobei die Auslenkung wiederum in eine Drehung eines Drehelements (22) umgewandelt wird.

2. Vorrichtung nach Anspruch 1, **dadurch gekennzeichnet, daß** die zweite Meßeinrichtung einen an die Drehachse (12) gekoppelten Rotor (18) mit einer spiralförmigen Kulissenführung (26) umfaßt.

3. Vorrichtung nach Anspruch 2, **dadurch gekennzeichnet, daß** das Auslenkelement ein drehbar gelagerter Arm (20) mit einem Fortsatz (24) ist, der in die Kulissenführung (26) eingreift.

4. Vorrichtung nach Anspruch 2 oder 3, **dadurch gekennzeichnet, daß** die spiralförmige Kulissenführung (26) eine Anzahl 360°-Windungen aufweist, die wenigstens der Anzahl der von der Drehachse (12) ausführbaren Umdrehungen entspricht.

5. Vorrichtung nach Anspruch 3 oder 4, **dadurch gekennzeichnet, daß** der Arm (20) eine Verzahnung aufweist, die in eine passende Gegenverzahnung des Drehelements (22) eingreift.

6. Vorrichtung nach Anspruch 5, **dadurch gekennzeichnet, daß** das Drehelement (22) Teil einer Drehwinkelmeßeinheit ist.

7. Vorrichtung nach einem der vorhergehenden Ansprüche, **dadurch gekennzeichnet, daß** die erste Meßeinrichtung ein weiteres Drehelement (14) umfaßt, das über eine Verzahnung an die Drehachse (12) gekoppelt ist.

8. Vorrichtung nach einem der vorhergehenden Ansprüche, **dadurch gekennzeichnet, daß** beide Meßeinrichtungen stetig ausgeführt sind.
